# EUROPÄISCHE PATENTSCHRIFT

(11) **EP 3 325 864 B1**
(45) Veröffentlichungstag und Bekanntmachung des Hinweises auf die Patenterteilung: **10.11.2021**
(21) Anmeldenummer: 16738070.8
(22) Anmeldetag: 11.07.2016
(51) Int. Cl.: F16K 31/385

(54) **EIGENMEDIUMGESTEUERTES REGELVENTIL**
PROCESS MEDIUM-CONTROLLED REGULATING VALVE
VANNE DE RÉGULATION COMMANDÉE PAR SON PROPRE FLUIDE

(30) Priorität: 17.07.2015 DE 102015009106
(43) Veröffentlichungstag der Anmeldung: 30.05.2018
(60) Teilanmeldung: 21195225.4
(73) Patentinhaber: Grohe AG, 58653 Hemer (DE)
(72) Erfinder: BUCHMÜLLER, Janik, 58239 Schwerte (DE); PALMER, Nicole, 77736 Zell A. H. (DE); BISCHOFF, Bernd, 58097 DE-Hagen (DE)
(86) Internationale Anmeldenummer: PCT/EP2016/001186
(87) Internationale Veröffentlichungsnummer: WO 2017/012698

(56) Entgegenhaltungen:
- EP-A2- 0 271 765
- US-A- 5 167 251
- US-A- 5 456 279
- US-A- 5 996 965
- US-B1- 7 182 096

## Beschreibung

Die Erfindung betrifft eigenmediumgesteuertes Regelventil für eine Flüssigkeitsdurchflussregelung nach dem Oberbegriff des Patentanspruches 1.

Ein derartiges eigenmediumgesteuertes Regelventil ist zum Beispiel in einer Sanitärarmatur einsetzbar, mittels der der Wasserablauf zu zum Beispiel einem Wannenablauf, einer Wannenbrause oder einer Kopfbrause ein- oder ausschaltbar ist. Im eigenmediumgesteuerten Regelventil wird der zulaufseitige Wasserdruck über eine Pilotleitung zu einem Pilotventil geführt, das eine Steuerkomponente für ein Hauptventil bildet. Das Pilotventil nutzt eine Steuerkammer oberhalb eines Hauptventilkolbens, um das Hauptventil zu öffnen oder zu schließen.

Aus der DE 36 42 669 A1 ist ein eigenmediumgesteuertes Regelventil bekannt. Das Regelventil ist aus einem Hauptventil und einem Pilotventil aufgebaut. Das Hauptventil weist einen in Axialrichtung hubverstellbaren Hauptventilkolben und einen damit zusammenwirkenden Hauptventilsitz auf. Zwischen dem Hauptventilkolben und dem Hauptventilsitz ist ein einstellbarer Durchflussspalt zur Regelung des Flüssigkeitsdurchflusses definiert. Mit dem Pilotventil ist der Hauptventilkolben steuerbar. Das Pilotventil weist auf der, dem Hauptventilsitz abgewandten Seite des Hauptventilkolbens eine Steuerkammer auf. Diese ist über eine Pilotleitung im Hauptventilkolben mit der Zulaufkammer sowie über eine Druckentlastungsleitung mit der Ablaufkammer strömungstechnisch verbunden. Das Pilotventil weist außerdem einen manuell oder über einen Elektromagneten hubverstellbaren Pilotventilkolben auf. Dieser schließt in einer Schließstellung die Druckentlastungsleitung, wodurch sich in der Steuerkammer ein Schließdruck aufbaut und der Hauptventilkolben in eine Schließrichtung hubverstellbar ist. In einer Öffnungsstellung öffnet der Pilotventilkolben die Druckentlastungsleitung, wodurch sich ein Druckausgleich zwischen der Steuerkammer und der Ablaufkammer einstellt und aufgrund des in der Zulaufkammer anstehenden Wasserdruckes der Hauptventilkolben in eine Öffnungsrichtung hubverstellbar ist.

Im Laufe der Betriebsdauer kann sich die Pilotleitung mit Verunreinigungen, zum Beispiel Kalkablagerungen zusetzen. Zur Beseitigung solcher Verunreinigungen ist aus der DE 36 42 669 A1 bekannt, ein in Axialrichtung ortsfestes Reinigungsdrahtelement mit einem Lochspiel durch die Pilotleitung zu führen. Bei einer Hubverstellung des Hauptventilkolbens ist die darin integrierte Pilotleitung entlang des ortsfesten Reinigungsdrahtelementes bewegbar, wodurch die in der Pilotleitung befindlichen Verunreinigungen lösbar sind.

In der obigen DE 36 42 669 A1 ist das Reinigungsdrahtelement im Wesentlichen berührungsfrei durch die Pilotleitung geführt. Dadurch können die Kalkablagerungen am Innenumfang der Pilotleitung sowie am Reinigungsdrahtelement nur unzureichend abgelöst werden.

Die Druckschrift US5456279A beschreibt ein Membran-Pilotventil mit einer selbstreinigenden Steueröffnung gemäß dem Oberbegriff des Anspruchs 1. Die Druckschrift US5996965 beschreibt ein Solenoid-Ventil mit einem Feder-gespannten Reinigungsstift, der sich in einem Kanal vor- und zurückbewegt.

Die Aufgabe der Erfindung besteht darin, ein eigenmediumgesteuertes Regelventil bereitzustellen, bei dem in einfacher Weise die Betriebssicherheit erhöht werden kann.

Die Aufgabe ist durch die Merkmale der unabhängigen Ansprüche gelöst. Bevorzugte Weiterbildungen der Erfindung sind in den Unteransprüchen offenbart.

Die Erfindung beruht auf dem Sachverhalt, dass im Stand der Technik ein gezieltes Abschaben der am Innenumfang der Pilotleitung befindlichen Kalkablagerungen nicht ermöglicht ist. Vor diesem Hintergrund weist das Reinigungsdrahtelement eine Betätigungskontur auf, die zumindest bei der Hubverstellung in Gleitanlage mit einer am Hauptventilkolben ausgebildeten Gegenkontur bringbar ist. Die drahtseitige Betätigungskontur sowie die kolbenseitige Gegenkontur sind geometrisch so ausgelegt, dass diese unter Aufbau einer auf das Drahtelement wirkenden Querkraft aneinander entlanggleiten. Durch die Querkraft-Beaufschlagung kann das Drahtelement gegen den Innenumfang der Pilotleitung stoßen, wodurch gegebenenfalls vorhandene Kalkablagerungen abgeschabt werden können.

In einer technischen Umsetzung kann das Reinigungsdrahtelement einen Durchmesser im Bereich von 0,3 bis 0,5 mm aufweisen, und zwar bei einem Innendurchmesser der Pilotleitung im Bereich von 0,7 bis 0,9 mm.

Das Reinigungsdrahtelement weist einen in einer Drahtlängserstreckungsrichtung durchgängig geradlinigen Draht-Grundkörper auf, wobei von dem Draht-Grundkörper die Betätigungskontur in Querrichtung abragt. Alternativ ist das Reinigungselement im Bereich des Draht-Grundkörpers spiralförmig gewickelt oder weist an dem Draht-Grundkörper eine Wellenprofilierung auf.

Im Hinblick auf eine einfache Herstellung ist die Betätigungskontur an einem freien Ende des Reinigungsdrahtelementes ausgebildet. Das freie Ende des Drahtelementes überragt eine derZulaufkammer zugewandte Pilotleitungsöffnung. Das freie Drahtende kann dabei frei beweglich, das heißt über einen Freigang von den Begrenzungswänden der Zulaufkammer, beabstandet sein. Eine besonders einfache Drahtgeometrie ergibt sich, wenn das freie Drahtende durchgängig geradlinig ist und gegenüber dem Draht-Grundkörper um einen Schrägwinkel abgestellt ist, der in einem Bereich von 0 bis 45°, insbesondere bei 20° liegen kann.

Das Reinigungsdrahtelement kann ein Rundprofil oder ein Mehrkantprofil aufweisen, bevorzugt ein Vierkantprofil. Untersuchungen haben ergeben, dass bei einem Vierkantprofil die Kanten ausreichend scharfkantig gestaltbar sind, um eine gute Schabwirkung zu erzeugen. Zur Steigerung der Schabeigenschaften kann das mehrkantprofilierte Reinigungselement spiralförmig verdreht sein.

Das Reinigungsdrahtelement kann im Bereich des Draht-Grundkörpers spiralförmig gewickelt sein. Das daran anschließende freie Drahtende kann dagegen, wie bereits oben erwähnt, geradlinig mit durchgängig konstantem Drahtquerschnitt ausgebildet sein. In einer alternativen Drahtgeometrie kann das Reinigungsdrahtelement, insbesondere dessen Draht-Grundkörper, eine Wellenprofilierung aufweisen. Zur Steigerung der Reinigungswirkung ist es bevorzugt, wenn die Wellenhöhe der Wellenprofilierung in Richtung auf die, der Zulaufkammer zugewandte Pilotleitungsöffnung zunimmt.

Wie oben erwähnt, ist es fertigungstechnisch bevorzugt, das freie Drahtende geradlinig mit durchgängig konstant bleibendem Drahtquerschnitt auszubilden. Anstelle dessen kann gegebenenfalls jedoch das freie Drahtende auch als eine abgewinkelte Schlaufe gebildet sein.

Zur weiteren Steigerung der Betriebssicherheit kann in der Steuerkammer zwischen dem Hauptventilkolben und einer davon axial abgewandten Ventilgehäusewand eine Schraubendruckfeder abgestützt sein, die sich um den Pilotventilkolben erstrecken kann. Mittels der Schraubendruckfeder kann eine zusätzliche Federkraft (d.h. eine Schließkraft) auf den Hauptventilkolben aufgebracht werden, wodurch auch bei einem geringen Wasserdruck auf der Zulaufseite der Hauptventilkolben betriebssicher in seiner Schließstellung gehalten werden kann. Die Schraubendruckfeder kann in Doppelfunktion materialeinheitlich und einstückig mit dem Reinigungsdrahtelement verlängert sein, der sich radial außerhalb der Schraubendruckfeder durch die Pilotleitung erstreckt.

In einer Ausführungsvariante kann der Hauptventilsitz eine, dem Hauptventilkolben zugewandte Dichtfläche aufweisen, die vollständig ebenflächig ausgeführt ist. Auf diese Weise ergibt sich eine besonders großflächige Dichtzone mit vergleichsweise geringem Flächendruck zwischen den gegenüberliegenden Dichtpartnern. Möglicherweise vorhandene Oberflächenunebenheiten oder Verunreinigungen in der Dichtzone können daher bereits zu Undichtigkeiten führen.

Vor diesem Hintergrund kann bevorzugt die dem Hauptventilkolben zugewandte Dichtfläche aufgeteilt sein in eine quer zur Axialrichtung ebenflächige Grundfläche und eine davon in Richtung auf den Hauptventilkolben vorragende Dichtkante. Die Dichtkante kann bevorzugt radial innen und die ringförmige Grundfläche radial außen angeordnet sein. Auf diese Weise ist gewährleistet, dass sich die Dichtkante des Hauptventilsitzes auch bereits bei geringen Wasserdrücken Linienkontakt in den gegenüberliegenden Dichtpartner eindrücken lässt, der bevorzugt aus einem elastischen Material gefertigt ist. Das elastische Material des mit dem Hauptventilsitz zusammenwirkenden Dichtpartners kann bevorzugt eine Shore/IRHD-Härte von 40° bis 70° aufweisen. Mögliche vorhandene Oberflächenunebenheiten an dem elastischen Gegenstück können durch die vorgelagerte Dichtkante abgedichtet werden. Mittels der im Vergleich zur Dichtkante zurückgesetzten Grundfläche kann eine Überbelastung des elastischen Gegenstückes, die vorzugsweise bei öfteren und langen Gebrauchsnutzungen auftreten kann, verhindert werden.

Bei höheren Wasserdrücken auf der Zulaufseite dient die ebene Grundfläche als zusätzliche Dichtfläche, die ebenfalls eine gewisse Eindringtiefe in das elastische Gegenstück am Hauptventilkolben erfährt, jedoch eine zu hohe Flächenpressung/-belastung der elastischen Dichtfläche vermeidet.

Da bei der Dauergebrauchsnutzung in Gebieten mit hartem Wasser eine hohe Kalkausfällung an allen wasserumströmten Teilen eintreten kann, ist zum einen eine hochglanzpolierte Dichtoberfläche von Vorteil (damit die geringe Oberflächenrauigkeit der Kalkanhaftung entgegenwirkt), zum anderen wirkt die scharfe Dichtkante als ein Kalkbrecher, der die Ablagerungen an dem elastischen Gegenstück des Hauptventilkolbens zum Abplatzen bringt und somit eine dauerhafte Dichtfunktion sicherstellt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln ober aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen näher erläutert.

Es zeigen:
- Fig. 1: in einer Seitenansicht im Vollschnitt ein eigenmediumgesteuertes Regelventil;
- Fig. 2 und 3: jeweils Detailansichten aus der Fig. 1 im geöffneten Zustand;
- Fig. 4: in einer vergrößerten teilweisen Halbschnittdarstellung das Regelventil bei geöffnetem Hauptventil;
- Fig. 5: in einer Ansicht entsprechend der Fig. 4 das Regelventil bei geschlossenem Hauptventil;
- Fig. 6 bis 9: jeweils unterschiedliche geometrische Ausführungsvarianten des Reinigungsdrahtelementes; und
- Fig. 10: in einer vergrößerten Halbschnittdarstellung den Hauptventilsitz mit einer zusätzlichen Dichtkante.

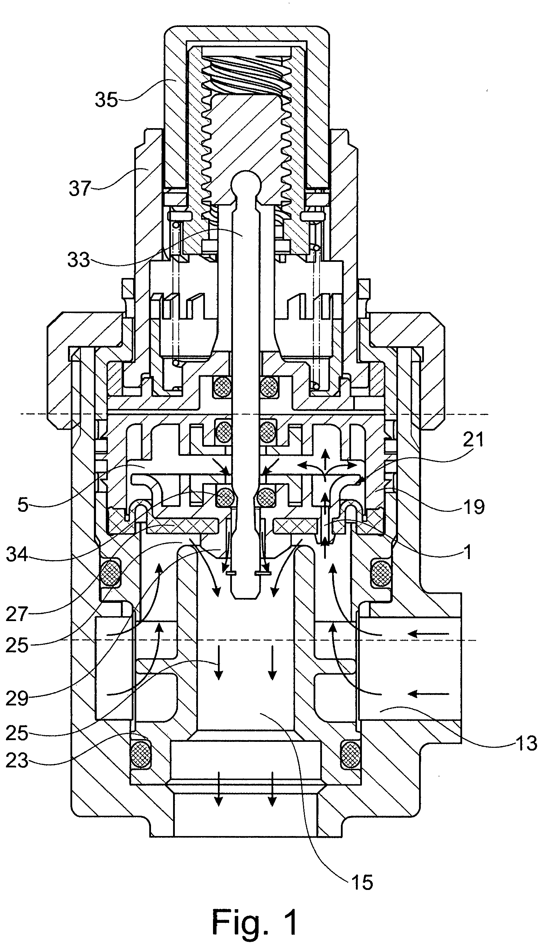

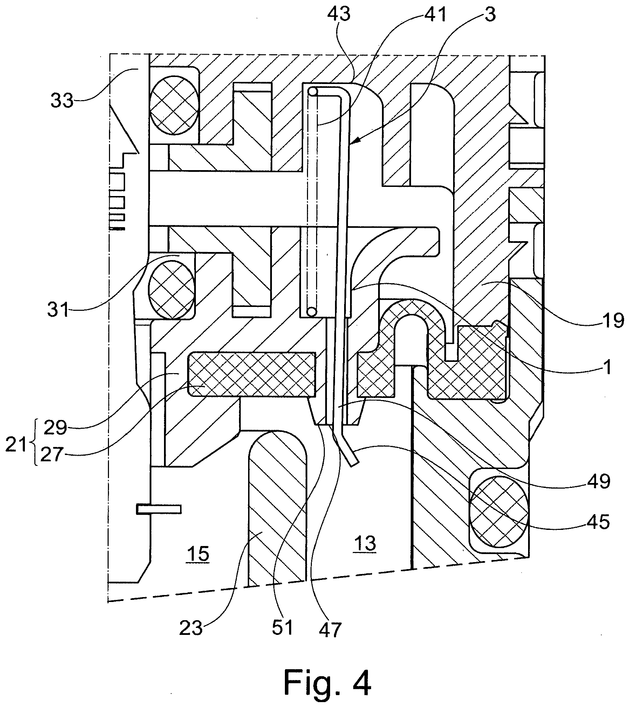

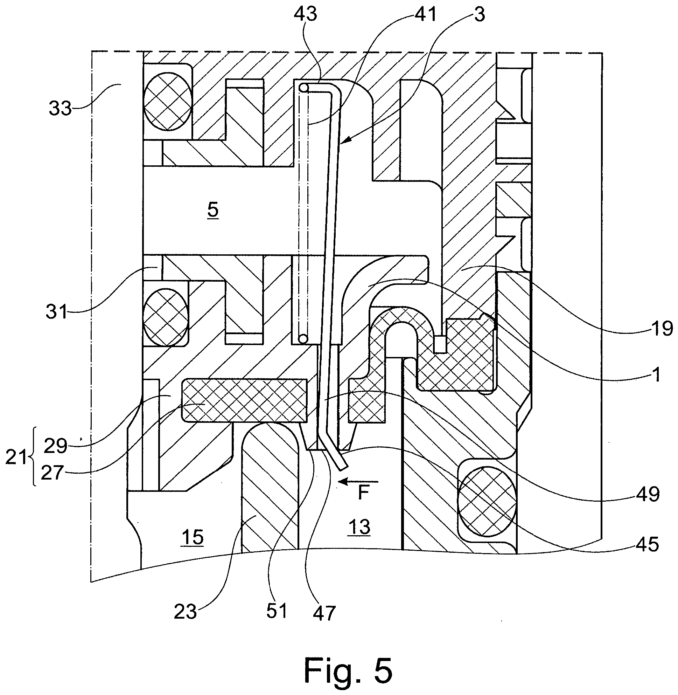

Anhand der Fig. 1 bis 3 wird zum einfacheren Verständnis der Erfindung zunächst der Aufbau und die grundsätzliche Funktionsweise des eigenmediumgesteuerten Regelventils beschrieben. Aus Gründen der Übersichtlichkeit ist in den Fig. 1 bis 3 ein durch eine Pilotleitung 1 geführter Reinigungsdraht 3 sowie eine in einer Steuerkammer 5 angeordnete Schraubendruckfeder 41 weggelassen und lediglich in den Fig. 4 und 5 dargestellt.

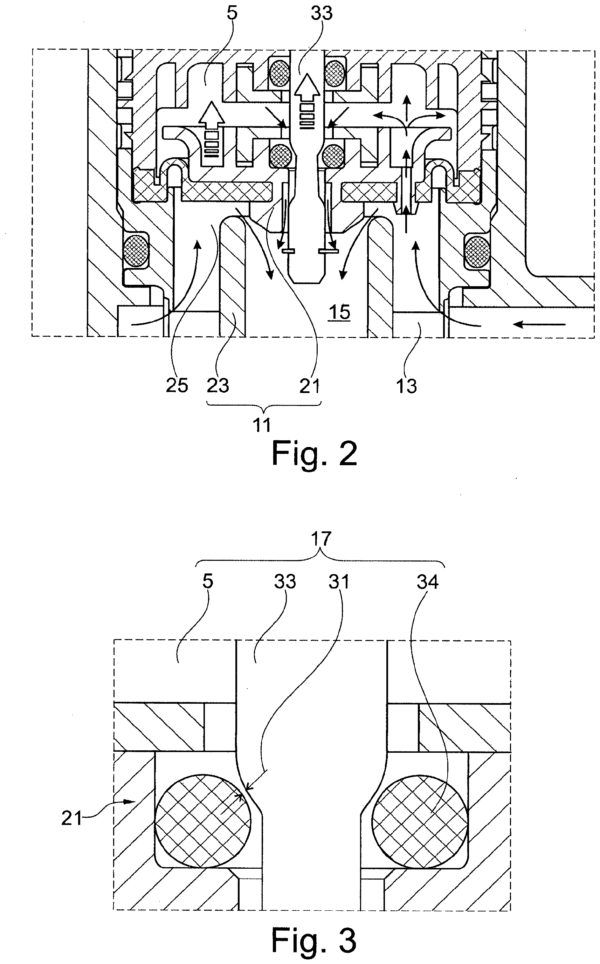

Das in der Fig. 1 gezeigte Regelventil weist ein Hauptventil 11 (Fig. 2), mit dem ein Flüssigkeitsdurchfluss zwischen einer Zulaufkammer 13 und einer Ablaufkammer 15 regelbar ist, und ein das Hauptventil 11 steuerndes Pilotventil 17 (Fig. 3) auf, das als eine Steuerkomponente für das Hauptventil 11 nutzbar ist. Das in der Fig. 1 gezeigte Hauptventil 11 ist durch einen in einem Ventilgehäuse 19 in Axialrichtung hubverstellbaren Hauptventilkolben 21 und aus einem damit zusammenwirkenden Hauptventilsitz 23 aufgebaut. In der Fig. 1 ist der Hauptventilkolben 21 in seiner Offenstellung gezeigt, wodurch ein Ventilspalt 25 zur Durchflussregelung freigelegt ist. Die Zulaufkammer 13 ist radial außerhalb des hohlzylindrischen Hauptventilsitzes 23 angeordnet, während sich die Ablaufkammer 15 radial innerhalb des Hauptventilsitzes 23 befindet.

Der Hauptventilkolben 21 ist in der Fig. 1 zweiteilig ausgeführt, und zwar mit einer unteren elastischen Membran 27, an der eine im Vergleich dazu starre Membranplatte 29 befestigt ist. Die Membran 27 ist radial außen am Ventilgehäuse 19 befestigt. Auf der in der Axialrichtung dem Hauptventilsitz 23 abgewandten Seite des Hauptventilkolbens 21 befindet sich die Steuerkammer 5. Diese ist über die im Hauptventilkolben 21 integrierte Pilotleitung 1 mit der Zulaufkammer 13 und über eine Druckentlastungsleitung 31 mit der Ablaufkammer 15 strömungstechnisch verbunden.

Zudem weist das Pilotventil 17 (Fig. 3) einen Pilotventilkolben 33 auf, der in Axialrichtung manuell hubverstellbar ist, und zwar gemäß der Fig. 1 entweder mittels eines Druckknopfes 35 oder alternativ mit Hilfe eines Drehknebels 37. Der Pilotventilkolben 33 ist in der Fig. 1 zentral durch die Druckentlastungsleitung 31 im Hauptventilkolben 21 geführt. Je nach manueller Betätigung des Regelventils kann der Pilotventilkolben 33 zwischen einer Schließstellung und einer Öffnungsstellung sowie in regelnde Zwischenposition verstellt werden. In der Fig. 1 ist der Pilotventilkolben 33 in seiner Öffnungsstellung gezeigt, in der die Druckentlastungsleitung 31 geöffnet ist. Auf diese Weise ergibt sich zwischen der Steuerkammer 5 und der Ablaufkammer 15 ein Druckausgleich. Entsprechend ist in der Fig. 1 oder 2 der Hauptventilkolben 21, wie dargestellt, aufgrund des in der Zulaufkammer 13 anstehenden Wasserdruckes in eine Öffnungsrichtung nach oben bewegt.

Wie aus der Fig. 4 hervorgeht, ist in der Steuerkammer 5 zusätzlich eine Schraubendruckfeder 41 angeordnet, die sich konzentrisch um den Pilotventilkolben 33 erstreckt und zwischen dem Hauptventilkolben 21 und einer axial gegenüberliegenden Ventilgehäusewand 43 abgestützt ist.

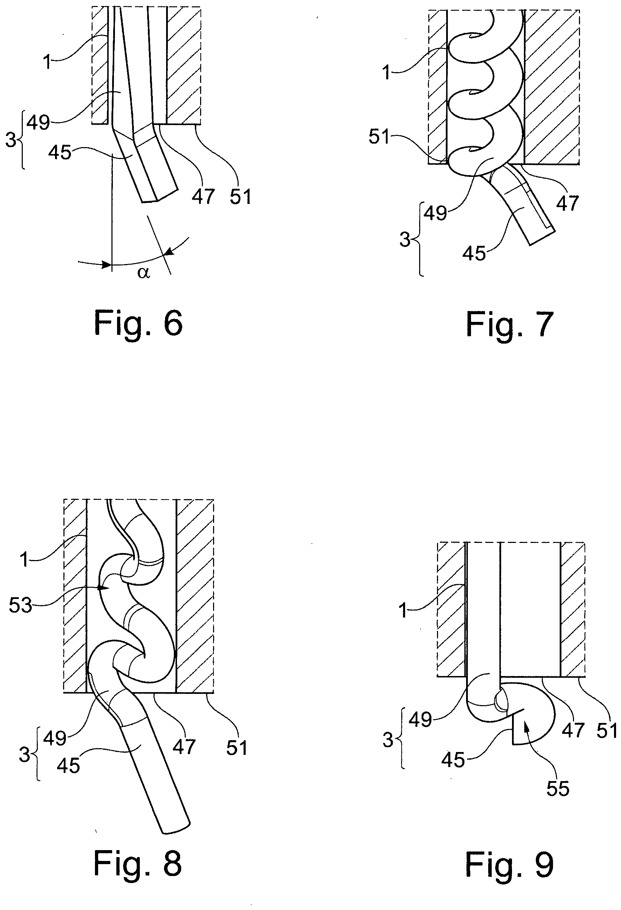

In den Fig. 6 bis 9 sind weitere Varianten des Reinigungsdrahtes 3 gezeigt. So weist in der Fig. 6 der Reinigungsdraht 3 kein Rundprofil, sondern ein Vierkantprofil auf. Zur Steigerung der Schabeigenschaften ist das Vierkantprofil spiralförmig verdreht. In der Fig. 7 ist der Reinigungsdraht 3 an seinem Draht-Grundkörper 49 spiralförmig gewickelt. Das daran anschließende freie Drahtende 45 ist, wie auch in den vorhergehenden Ausführungsvarianten, geradlinig mit durchgängig konstantem Drahtquerschnitt ausgebildet. In der Fig. 8 weist der Reinigungsdraht 3 an seinem Draht-Grundkörper 49 eine Wellenprofilierung 53 auf. Die Wellenhöhe der Wellenprofilierung 53 nimmt in Richtung auf die, der Zulaufkammer 13 zugewandte Pilotleitungsöffnung 47 zu. In der Fig. 9 ist das freie Drahtende 45 nicht mehr geradlinig ausgeführt, sondern mit einer abgewinkelten Schlaufe 55.

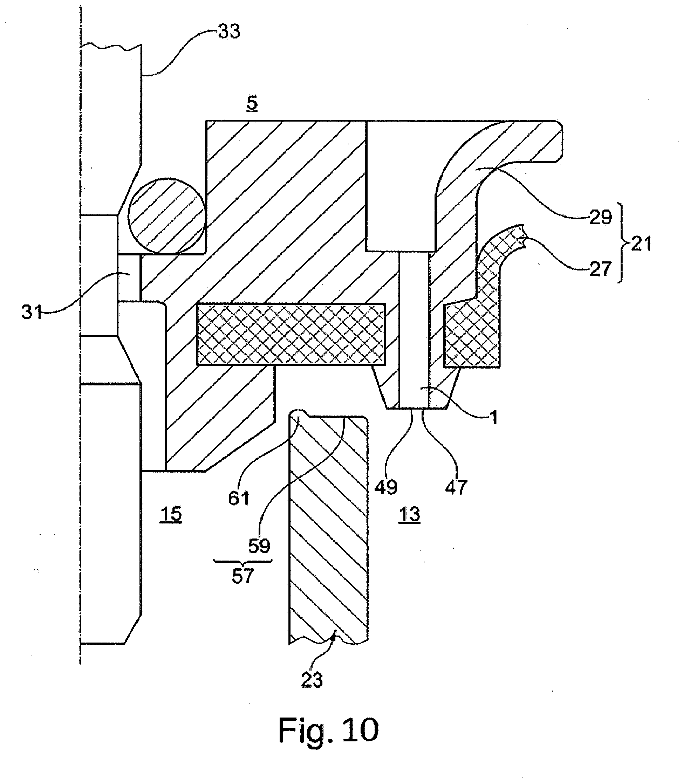

In der Fig. 10 ist ein weiteres Ausführungsbeispiel gezeigt, das alternativ zu den vorhergehenden Ausführungsbeispielen zu betrachten ist oder eine Weiterbildung dazu bildet. So weist gemäß der Fig. 10 der Hauptventilsitz 23 eine dem Hauptventilkolben 21 zugewandte Dichtfläche 57 auf, die zweigeteilt ist, und zwar in eine quer zur Axialrichtung ebenflächige Grundfläche 59 und eine davon in Richtung auf den Hauptventilkolben 21 vorragende Dichtekante 61. Die Dichtkante 61 ist radial innen und die Grundfläche 59 radial außen angeordnet. Die Grundfläche 59 wirkt als ein Bewegungsanschlag, um die Hubbewegung des Hauptventilkolbens 21 zu begrenzen.

Alternativ zu der in der Fig. 10 gezeigten Variante kann die Dichtkante 61 auch radial außen und die Grundfläche 59 radial innen angeordnet sein. Ferner kann die Dichtkante 61 in Radialrichtung betrachtet auch mittig angeordnet sein, d.h. sowohl radial außen als auch radial innen von der ebenflächigen Grundfläche 59 begrenzt sein.

### Bezugszeichenliste

| | | | |
|---|---|---|---|
| 1 | Pilotleitung | 55 | Schlaufe |
| 3 | Reinigungsdrahtelement | 57 | Dichtfläche |
| 5 | Steuerkammer | 59 | Grundfläche |
| 11 | Hauptventil | 61 | Dichtkante |
| 13 | Zulaufkammer | F | Querkraft |
| 15 | Ablaufkammer | | |
| 17 | Pilotventil | | |
| 19 | Ventilgehäuse | | |
| 21 | Hauptventilkolben | | |
| 23 | Hauptventilsitz | | |
| 25 | Ventilspalt | | |
| 27 | Membran | | |
| 29 | Membranplatte | | |
| 31 | Druckentlastungsleitung | | |
| 33 | Pilotventilkolben | | |
| 34 | Pilotventilsitz | | |
| 35 | Druckknopf | | |
| 37 | Drehknebel | | |
| 41 | Schraubendruckfeder | | |
| 43 | Gehäusewand | | |
| 45 | Betätigungskontur | | |
| 47 | Pilotleitungsöffnung | | |
| 49 | Draht-Grundkörper | | |
| 51 | Öffnungsrand | | |
| 53 | Wellenprofilierung | | |

## Patentansprüche

1. Eigenmediumgesteuertes Regelventil für eine Flüssigkeitsdurchflussregelung, mit einem Hauptventil (11), das einen in Axialrichtung hubverstellbaren Hauptventilkolben (21) und einen damit zusammenwirkenden Hauptventilsitz (23) aufweist, der radial innen eine Ablaufkammer (15) und radial außen eine Zulaufkammer (13) begrenzt, und mit einem Pilotventil (17) zur Steuerung des Hauptventilkolbens (21), das auf der, dem Hauptventilsitz (23) abgewandten Seite des Hauptventilkolbens (21) eine Steuerkammer (5) aufweist, die über eine Pilotleitung (1) im Hauptventilkolben (21) mit der Zulaufkammer (13) und über eine Druckentlastungsleitung (31) mit der Ablaufkammer (15) strömungstechnisch verbunden ist und einen Pilotventilkolben (33) aufweist, der in einer Schließstellung die Druckentlastungsleitung (31) schließt, und zwar unter Aufbau eines Schließdruckes in der Steuerkammer (5) sowie unter Hubverstellung des Hauptventilkolbens (21) in eine Schließrichtung, und der in einer Öffnungsstellung die Druckentlastungsleitung (31) öffnet, und zwar unter Druckausgleich zwischen der Steuerkammer (5) und der Ablaufkammer (15) sowie unter Hubverstellung des Hauptventilkolbens (21) in eine Öffnungsrichtung, wobei ein in Axialrichtung ortsfestes Reinigungsdrahtelement (3) mit Lochspiel durch die Pilotleitung (1) geführt ist und bei einer Hubverstellung des Hauptventilkolbens (21) die Pilotleitung (1) entlang des darin geführten Reinigungsdrahtelements (3) bewegbar ist, wobei das Reinigungsdrahtelement (3) eine Betätigungskontur (45) aufweist, die zumindest bei der Hubverstellung des Hauptventilkolbens (21) in Gleitanlage mit einer am Hauptventilkolben (21) ausgebildeten Gegenkontur (51) bringbar ist,
und zwar unter Aufbau einer auf das Reinigungsdrahtelement (3) wirkenden Querkraft (F), **dadurch gekennzeichnet, dass** das Reinigungsdrahtelement (3) einen, in einer Drahtlängserstreckungsrichtung durchgängig geradlinigen durch die Pilotleitung geführten Draht-Grundkörper (49) aufweist, von dem die Betätigungskontur (45) in Querrichtung abragt, wobei die Betätigungskontur (45) ein freies Drahtende des Reinigungsdrahtelements (3) ist, wobei das durch die Pilotleitung (1) geführte Reinigungsdrahtelement (3) mit seinem freien Drahtende (45) eine der Zulaufkammer (13) zugewandte Pilotleitungsöffnung (47) überragt, und wobei zur Ausbildung der Betätigungskontur (45) das freie Drahtende gegenüber dem Draht-Grundkörper (49) um einen Schrägwinkel (a) abgestellt ist, oder das freie Drahtende (45) eine abgewinkelte Schlaufe (55) aufweist.

2. Eigenmediumgesteuertes Regelventil für eine Flüssigkeitsdurchflussregelung, mit einem Hauptventil (11), das einen in Axialrichtung hubverstellbaren Hauptventilkolben (21) und einen damit zusammenwirkenden Hauptventilsitz (23) aufweist, der radial innen eine Ablaufkammer (15) und radial außen eine Zulaufkammer (13) begrenzt, und mit einem Pilotventil (17) zur Steuerung des Hauptventilkolbens (21), das auf der, dem Hauptventilsitz (23) abgewandten Seite des Hauptventilkolbens (21) eine Steuerkammer (5) aufweist, die über eine Pilotleitung (1) im Hauptventilkolben (21) mit der Zulaufkammer (13) und über eine Druckentlastungsleitung (31) mit der Ablaufkammer (15) strömungstechnisch verbunden ist und einen Pilotventilkolben (33) aufweist, der in einer Schließstellung die Druckentlastungsleitung (31) schließt, und zwar unter Aufbau eines Schließdruckes in der Steuerkammer (5) sowie unter Hubverstellung des Hauptventilkolbens (21) in eine Schließrichtung, und der in einer Öffnungsstellung die Druckentlastungsleitung (31) öffnet, und zwar unter Druckausgleich zwischen der Steuerkammer (5) und der Ablaufkammer (15) sowie unter Hubverstellung des Hauptventilkolbens (21) in eine Öffnungsrichtung, wobei ein in Axialrichtung ortsfestes Reinigungsdrahtelement (3) mit Lochspiel durch die Pilotleitung (1) geführt ist und bei einer Hubverstellung des Hauptventilkolbens (21) die Pilotleitung (1) entlang des darin geführten Reinigungsdrahtelements (3) bewegbar ist, wobei das Reinigungsdrahtelement (3) eine Betätigungskontur (45) aufweist, die zumindest bei der Hubverstellung des Hauptventilkolbens (21) in Gleitanlage mit einer am Hauptventilkolben (21) ausgebildeten Gegenkontur (51) bringbar ist,
und zwar unter Aufbau einer auf das Reinigungsdrahtelement (3) wirkenden Querkraft (F), **dadurch gekennzeichnet, dass** das Reinigungsdrahtelement (3) ein Rundprofil oder ein Mehrkantprofil aufweist, insbesondere ein Vierkantprofil, wobei das Reinigungsdrahtelement (3) im Bereich des Draht-Grundkörpers (49), spiralförmig gewickelt ist, wobei die Betätigungskontur (45) ein freies Drahtende des Reinigungsdrahtelements (3) ist, wobei das durch die Pilotleitung (1) geführte Reinigungsdrahtelement (3) mit seinem freien Drahtende (45) eine der Zulaufkammer (13) zugewandte Pilotleitungsöffnung (47) überragt, und wobei zur Ausbildung der Betätigungskontur (45) das freie Drahtende gegenüber dem Draht-Grundkörper (49) um einen Schrägwinkel (a) abgestellt ist, oder das freie Drahtende (45) eine abgewinkelte Schlaufe (55) aufweist.

3. Eigenmediumgesteuertes Regelventil für eine Flüssigkeitsdurchflussregelung, mit einem Hauptventil (11), das einen in Axialrichtung hubverstellbaren Hauptventilkolben (21) und einen damit zusammenwirkenden Hauptventilsitz (23) aufweist, der radial innen eine Ablaufkammer (15) und radial außen eine Zulaufkammer (13) begrenzt, und mit einem Pilotventil (17) zur Steuerung des Hauptventilkolbens (21), das auf der, dem Hauptventilsitz (23) abgewandten Seite des Hauptventilkolbens (21) eine Steuerkammer (5) aufweist, die über eine Pilotleitung (1) im Hauptventilkolben (21) mit der Zulaufkammer (13) und über eine Druckentlastungsleitung (31) mit der Ablaufkammer (15) strömungstechnisch verbunden ist und einen Pilotventilkolben (33) aufweist, der in einer Schließstellung die Druckentlastungsleitung (31) schließt, und zwar unter Aufbau eines Schließdruckes in der Steuerkammer (5) sowie unter Hubverstellung des Hauptventilkolbens (21) in eine Schließrichtung, und der in einer Öffnungsstellung die Druckentlastungsleitung (31) öffnet, und zwar unter Druckausgleich zwischen der Steuerkammer (5) und der Ablaufkammer (15) sowie unter Hubverstellung des Hauptventilkolbens (21) in eine Öffnungsrichtung, wobei ein in Axialrichtung ortsfestes Reinigungsdrahtelement (3) mit Lochspiel durch die Pilotleitung (1) geführt ist und bei einer Hubverstellung des Hauptventilkolbens (21) die Pilotleitung (1) entlang des darin geführten Reinigungsdrahtelements (3) bewegbar ist, wobei das Reinigungsdrahtelement (3) eine Betätigungskontur (45) aufweist, die zumindest bei der Hubverstellung des Hauptventilkolbens (21) in Gleitanlage mit einer am Hauptventilkolben (21) ausgebildeten Gegenkontur (51) bringbar ist, und zwar unter Aufbau einer auf das Reinigungsdrahtelement (3) wirkenden Querkraft (F), **dadurch gekennzeichnet, dass** das Reinigungsdrahtelement (3) ein Rundprofil oder ein Mehrkantprofil aufweist, insbesondere ein Vierkantprofil, wobei das Reinigungsdrahtelement (3) an dem Draht-Grundkörper (49) eine Wellenprofilierung (53) aufweist, wobei die Betätigungskontur (45) ein freies Drahtende des Reinigungsdrahtelements (3) ist, wobei das durch die Pilotleitung (1) geführte Reinigungsdrahtelement (3) mit seinem freien Drahtende (45) eine der Zulaufkammer (13) zugewandte Pilotleitungsöffnung (47) überragt, und wobei zur Ausbildung der Betätigungskontur (45) das freie Drahtende gegenüber dem Draht-Grundkörper (49) um einen Schrägwinkel (a) abgestellt ist, oder das freie Drahtende (45) eine abgewinkelte Schlaufe (55) aufweist.

4. Eigenmediumgesteuertes Regelventil nach einem der vorhergehenden Ansprüche, **dadurch gekennzeichnet, dass** ein Öffnungsrand der Pilotleitungsöffnung (47) als Gegenkontur (51) ausgebildet ist.

5. Eigenmediumgesteuertes Regelventil nach Anspruch 4, **dadurch gekennzeichnet, dass** das freie Drahtende (45) des Reinigungsdrahtelements (3) über einen Freigang von den Begrenzungswänden der Zulaufkammer (13) beabstandet ist.

6. Eigenmediumgesteuertes Regelventil nach Anspruch 1, **dadurch gekennzeichnet, dass** das Reinigungsdrahtelement (3) ein Rundprofil oder ein Mehrkantprofil aufweist, insbesondere ein Vierkantprofil, und dass insbesondere das Reinigungsdrahtelement (3) mit Mehrkantprofil spiralförmig verdreht ist zur Steigerung von Schabeigenschaften der Kanten.

7. Eigenmediumgesteuertes Regelventil nach einem der Ansprüche 2, 3 oder 6, **dadurch gekennzeichnet, dass** wenn das freie Drahtende gegenüber dem Draht-Grundkörper (49) um einen Schrägwinkel (a) abgestellt ist, ist das daran anschließende freie Drahtende (45) geradlinig mit durchgängig konstantem Drahtquerschnitt ausgebildet.

8. Eigenmediumgesteuertes Regelventil nach Anspruch 3, **dadurch gekennzeichnet, dass** die Wellenhöhe der Wellenprofilierung (53) in Richtung auf die, der Zulaufkammer (13) zugewandte Pilotleitungsöffnung (47) zunimmt.

9. Eigenmediumgesteuertes Regelventil nach einem der vorhergehenden Ansprüche, **dadurch gekennzeichnet, dass** in der Steuerkammer (5) zwischen dem Hauptventilkolben (21) und einer davon axial abgewandten Ventilgehäusewand (43) eine Schraubendruckfeder (41) abgestützt ist, und dass die Schraubendruckfeder (41) mit dem Reinigungsdrahtelement (3) verlängert ist.

10. Eigenmediumgesteuertes Regelventil insbesondere nach einem der vorhergehenden Ansprüche, **dadurch gekennzeichnet, dass** der Hauptventilsitz (23) eine dem Hauptventilkolben (21) zugewandte Dichtfläche (57) aufweist, und dass die Dichtfläche (57) aufgeteilt ist in eine quer zur Axialrichtung ebenflächige Grundfläche (59) und eine davon in Richtung auf den Hauptventilkolben (21) vorragende Dichtkante (61).

11. Eigenmediumgesteuertes Regelventil nach Anspruch 10, **dadurch gekennzeichnet, dass** die Dichtkante (61) radial innen und die Grundfläche (59) radial außen angeordnet ist, und/oder dass die Grundfläche (59) als ein Bewegungsanschlag zur Begrenzung der Hubbewegung des Hauptventilkolbens (21) wirkt.

## Claims

1. A process medium-controlled regulating valve for fluid flow-through regulation, having a main valve (11), which has an axially stroke adjustable main valve piston (21) and a main valve seat (23) cooperating therewith, which delimits an outlet chamber (15) in a radially inward direction and an inlet chamber (13) in a radially outward direction, and having a pilot valve (17) for controlling the main valve piston (21), which has a control chamber (5) on the side of the main valve piston (21) facing away from the main valve seat (23), which is fluidically connected to the inlet chamber (13) via a pilot line (1) in the main valve piston (21) and to the outlet chamber (15) via a pressure relief line (31), and a pilot valve piston (33), which in a closed position closes the pressure relief line (31), building up a closing pressure in the control chamber (5) and moving the main valve piston (21) in a closing direction, and which in an open position opens the pressure relief line (31), equalizing the pressure between the control chamber (5) and the outlet chamber (15) and moving the main valve piston (21) in an opening direction, wherein an axially stationary cleaning wire element (3) is guided with hole clearance through the pilot line (1) and the pilot line (1) is movable along the cleaning wire element (3) guided therein during a stroke adjustment of the main valve piston (21), wherein the cleaning wire element (3) has an actuation contour (45), which can be brought into sliding engagement with a counter contour (51) formed on the main valve piston (21) at least during the stroke adjustment of the main valve piston (21), building up a transverse force (F) acting on the cleaning wire element (3), **characterized in that** the cleaning wire element (3) has a wire base body (49) guided through the pilot line, which is continuously straight in a wire longitudinal extension direction and from which the actuation contour (45) projects in a transverse direction, wherein the actuation contour is a free wire end of the cleaning wire element (3), wherein the cleaning wire element (3) guided through the pilot line (1) extends by its free wire end (45) beyond a pilot line opening (47) facing the inlet chamber (13), and wherein the free wire end is bent at an oblique angle (α) with respect to the wire base body (49) or the free wire end (45) has an angled loop (55) in order to form the actuation contour (45).

2. The process medium-controlled regulating valve for fluid flow-through regulation, having a main valve (11), which has an axially stroke adjustable main valve piston (21) and a main valve seat (23) cooperating therewith, which delimits an outlet chamber (15) in a radially inward direction and an inlet chamber (13) in a radially outward direction, and having a pilot valve (17) for controlling the main valve piston (21), which has a control chamber (5) on the side of the main valve piston (21) facing away from the main valve seat (23), which is fluidically connected to the inlet chamber (13) via a pilot line (1) in the main valve piston (21) and to the outlet chamber (15) via a pressure relief line (31), and a pilot valve piston (33), which in a closed position closes the pressure relief line (31), building up a closing pressure in the control chamber (5) and moving the main valve piston (21) in a closing direction, and which in an open position opens the pressure relief line (31), equalizing the pressure between the control chamber (5) and the outlet chamber (15) and moving the main valve piston (21) in an opening direction, wherein an axially stationary cleaning wire element (3) is guided with hole clearance through the pilot line (1) and the pilot line (1) is movable along the cleaning wire element (3) guided therein during a stroke adjustment of the main valve piston (21), wherein the cleaning wire element (3) has an actuation contour (45), which can be brought into sliding engagement with a counter contour (51) formed on the main valve piston (21) at least during the stroke adjustment of the main valve piston (21), building up a transverse force (F) acting on the cleaning wire element (3), **characterized in that** the cleaning wire element (3) has a round profile or a polygonal profile, in particular a square profile, wherein the cleaning wire element (3) is helically coiled in the area of the wire base body (49), wherein the actuation contour (45) is a free wire end of the cleaning wire element (3), wherein the cleaning wire element (3) guided through the pilot line (1) extends by its free wire end (45) beyond a pilot line opening (47) facing the inlet chamber (13), and wherein the free wire end is bent at an oblique angle (α) with respect to the wire base body (49) or the free wire end (45) has an angled loop (55) in order to form the actuation contour (45).

3. The process medium-controlled regulating valve for fluid flow-through regulation, having a main valve (11), which has an axially stroke adjustable main valve piston (21) and a main valve seat (23) cooperating therewith, which delimits an outlet chamber (15) in a radially inward direction and an inlet chamber (13) in a radially outward direction, and having a pilot valve (17) for controlling the main valve piston (21), which has a control chamber (5) on the side of the main valve piston (21) facing away from the main valve seat (23), which is fluidically connected to the inlet chamber (13) via a pilot line (1) in the main valve piston (21) and to the outlet chamber (15) via a pressure relief line (31), and a pilot valve piston (33), which in a closed position closes the pressure relief line (31), building up a closing pressure in the control chamber (5) and moving the main valve piston (21) in a closing direction, and which in an open position opens the pressure relief line (31), equalizing the pressure between the control chamber (5) and the outlet chamber (15) and moving the main valve piston (21) in an opening direction, wherein an axially stationary cleaning wire element (3) is guided with hole clearance through the pilot line (1) and the pilot line (1) is movable along the cleaning wire element (3) guided therein during a stroke adjustment of the main valve piston (21), wherein the cleaning wire element (3) has an actuation contour (45), which can be brought into sliding engagement with a counter contour (51) formed on the main valve piston (21) at least during the stroke adjustment of the main valve piston (21), building up a transverse force (F) acting on the cleaning wire element (3), **characterized in that** the cleaning wire element (3) has a round profile or a polygonal profile, in particular a square profile, wherein the wire cleaning element (3) has wave profiling on the wire base body (49), wherein the actuation contour (45) is a free wire end of the cleaning wire element (3), wherein the cleaning wire element (3) guided through the pilot line (1) extends by its free wire end (45) beyond a pilot line opening (47) facing the inlet chamber (13), and wherein the free wire end is bent at an oblique angle (α) with respect to the wire base body (49) or the free wire end (45) has an angled loop (55) in order to form the actuation contour (45).

4. The process medium-controlled regulating valve according to any one of the preceding claims, **characterized in that** an opening edge of the pilot line opening (47) is configured as a counter contour (51).

5. The process medium-controlled regulating valve according to Claim 4, **characterized in that** the free wire end (45) of the cleaning wire element (3) is separated by a clearance from the partition walls of the inlet chamber (13) .

6. The process medium-controlled regulating valve according to Claim 1, **characterized in that** the cleaning wire element (3) has a round profile or a polygonal profile, in particular a square profile, and that in particular the cleaning wire element (3) with a polygonal profile is helically wound in order to enhance the scraping properties of the edges.

7. The process medium-controlled regulating valve according to any one of Claims 2, 3 or 6, **characterized in that,** if the free wire end is bent at an oblique angle (α) with respect to the wire base body (49), then the adjoining free wire end (45) is configured rectilinearly with a continuously constant wire cross section.

8. The process medium-controlled regulating valve according to Claim 3, **characterized in that** the wave height of the wave profiling (53) increases in a direction toward the pilot line opening (47) facing the inlet chamber (13).

9. The process medium-controlled regulating valve according to any one of the preceding claims, **characterized in that** a helical compression spring (41) is braced in the control chamber (5) between the main valve piston (21) and a valve housing wall (43) facing axially away from said piston, and that the helical compression spring (41) is extended by the cleaning wire element (3).

10. The process medium-controlled regulating valve, in particular according to any one of the preceding claims, **characterized in that** the main valve seat (23) has a sealing surface (57) facing the main valve piston (21), and that the sealing surface (57) is divided into a planar base (59) perpendicular to the axial direction and into a sealing edge (61) projecting therefrom toward the main valve piston (21).

11. The process medium-controlled regulating valve according to Claim 10, **characterized in that** the sealing edge (61) is positioned in a radially inward direction and that the base (59) is positioned in a radially outward direction, and/or that the base (59) acts as a travel stop for limiting the stroke movement of the main valve piston (21) .

## Revendications

1. Vanne de régulation, commandée par son propre fluide, destinée à réguler un débit de liquide, pourvue d'une vanne principale (11), qui comporte un piston de vanne principale (21) réglable en course dans la direction axiale et un siège de vanne principale (23) coopérant avec ce dernier, qui délimite en direction radiale à l'intérieur une chambre d'évacuation (15) et en direction radiale à l'extérieur une chambre d'alimentation (13) et pourvue d'une vanne pilote (17), permettant de commander le piston de vanne principale (21), qui sur le côté du piston de vanne principale (21) qui est opposé au siège de vanne principale (23) comporte une chambre de commande (5), qui par l'intermédiaire d'une conduite pilote (1) dans le piston de vanne principale (21) est en liaison fluidique avec la chambre d'alimentation (13) et par l'intermédiaire d'une conduite de décharge de pression (31) est en liaison fluidique avec la chambre d'évacuation (15) et qui comporte un piston de vanne pilote (33), qui dans une position de fermeture, ferme la conduite de décharge de pression (31), à savoir en créant une pression de fermeture dans la chambre de commande (5), ainsi qu'en ajustant la course du piston de vanne principale (21) dans une direction de fermeture, et qui dans une position d'ouverture, ouvre la conduite de décharge de pression (31), à savoir en compensant la pression entre la chambre de commande (5) et la chambre d'évacuation (15), ainsi qu'en ajustant la course du piston de vanne principale (21) dans une direction d'ouverture, un élément à fil de nettoyage (3) stationnaire dans la direction axiale étant conduit avec un jeu dans le trou dans la conduite pilote (1) et lors d'un ajustage de la course du piston de vanne principale (21), la conduite pilote (1) étant mobile le long de l'élément à fil de nettoyage (3) qui est guidé en son intérieur, l'élément à fil de nettoyage (3) comportant un contour d'actionnement (45), qui au moins lors de l'ajustage de la course du piston de vanne principale (21) est susceptible d'être amené en appui coulissant avec un contour antagoniste (51) conçu sur le piston de vanne principale (21), à savoir en établissant une force principale (F) agissant sur l'élément à fil de nettoyage (3), **caractérisée en ce que** l'élément à fil de nettoyage (3) comporte un corps de base en fil métallique (49) guidé à travers la conduite pilote, rectiligne en continu dans une direction d'extension longitudinale du fil métallique, à partir duquel le contour d'actionnement (45) saillit dans la direction transversale, le contour d'actionnement (45) étant une extrémité libre de fil métallique de l'élément à fil de nettoyage (3), l'élément à fil de nettoyage (3) guidé à travers la conduite pilote (1) saillant par son extrémité libre de fil métallique (45) par-dessus un orifice de la conduite pilote (47) qui fait face à la chambre d'alimentation (13), et pour créer le contour d'actionnement (45), l'extrémité libre de fil métallique étant écartée par rapport au corps de base en fil métallique (49) de la valeur d'un angle oblique (α), l'extrémité libre de fil métallique (45) comportant une boucle (55) coudée.

2. Vanne de régulation, commandée par son propre fluide, destinée à réguler un débit de liquide, pourvue d'une vanne principale (11), qui comporte un piston de vanne principale (21) réglable en course dans la direction axiale et un siège de vanne principale (23) coopérant avec ce dernier, qui délimite en direction radiale à l'intérieur une chambre d'évacuation (15) et en direction radiale à l'extérieur une chambre d'alimentation (13) et pourvue d'une vanne pilote (17), permettant de commander le piston de vanne principale (21), qui sur le côté du piston de vanne principale (21) qui est opposé au siège de vanne principale (23) comporte une chambre de commande (5), qui par l'intermédiaire d'une conduite pilote (1) dans le piston de vanne principale (21) est en liaison fluidique avec la chambre d'alimentation (13) et par l'intermédiaire d'une conduite de décharge de pression (31) est en liaison fluidique avec la chambre d'évacuation (15) et qui comporte un piston de vanne pilote (33), qui dans une position de fermeture, ferme la conduite de décharge de pression (31), à savoir en créant une pression de fermeture dans la chambre de commande (5), ainsi qu'en ajustant la course du piston de vanne principale (21) dans une direction de fermeture, et qui dans une position d'ouverture, ouvre la conduite de décharge de pression (31), à savoir en compensant la pression entre la chambre de commande (5) et la chambre d'évacuation (15), ainsi qu'en ajustant la course du piston de vanne principale (21) dans une direction d'ouverture, un élément à fil de nettoyage (3) stationnaire dans la direction axiale étant conduit avec un jeu dans le trou dans la conduite pilote (1) et lors d'un ajustage de la course du piston de vanne principale (21), la conduite pilote (1) étant mobile le long de l'élément à fil de nettoyage (3) qui est guidé en son intérieur, l'élément à fil de nettoyage (3) comportant un contour d'actionnement (45), qui au moins lors de l'ajustage de la course du piston de vanne principale (21) est susceptible d'être amené en appui coulissant avec un contour antagoniste (51) conçu sur le piston de vanne principale (21), à savoir en établissant une force principale (F) agissant sur l'élément à fil de nettoyage (3), **caractérisée en ce que** l'élément à fil de nettoyage (3) présente un profil rond ou un profil polygonal, notamment un profil carré, dans la région du corps de base en fil métallique {49), l'élément à fil de nettoyage (3) étant enroulé en spirale, le contour d'actionnement (45) étant une extrémité libre de fil métallique de l'élément à fil de nettoyage (3), l'élément à fil de nettoyage (3) guidé à travers la conduite pilote (1) saillant par son extrémité libre de fil métallique (45) par-dessus un orifice de la conduite pilote (47) qui fait face à la chambre d'alimentation (13), et pour créer le contour d'actionnement (45), l'extrémité libre de fil métallique étant écartée par rapport au corps de base en fil métallique (49) de la valeur d'un angle oblique (α), l'extrémité libre de fil métallique (45) comportant une boucle (55) coudée.

3. Vanne de régulation, commandée par son propre fluide, destinée à réguler un débit de liquide, pourvue d'une vanne principale (11), qui comporte un piston de vanne principale (21) réglable en course dans la direction axiale et un siège de vanne principale (23) coopérant avec ce dernier, qui délimite en direction radiale à l'intérieur une chambre d'évacuation (15) et en direction radiale à l'extérieur une chambre d'alimentation (13) et pourvue d'une vanne pilote (17), permettant de commander le piston de vanne principale (21), qui sur le côté du piston de vanne principale (21) qui est opposé au siège de vanne principale (23) comporte une chambre de commande (5), qui par l'intermédiaire d'une conduite pilote (1) dans le piston de vanne principale (21) est en liaison fluidique avec la chambre d'alimentation (13) et par l'intermédiaire d'une conduite de décharge de pression (31) est en liaison fluidique avec la chambre d'évacuation (15) et qui comporte un piston de vanne pilote (33), qui dans une position de fermeture, ferme la conduite de décharge de pression (31), à savoir en créant une pression de fermeture dans la chambre de commande (5), ainsi qu'en ajustant la course du piston de vanne principale (21) dans une direction de fermeture, et qui dans une position d'ouverture, ouvre la conduite de décharge de pression (31), à savoir en compensant la pression entre la chambre de commande (5) et la chambre d'évacuation (15), ainsi qu'en ajustant la course du piston de vanne principale (21) dans une direction d'ouverture, un élément à fil de nettoyage (3) stationnaire dans la direction axiale étant conduit avec un jeu dans le trou dans la conduite pilote (1) et lors d'un ajustage de la course du piston de vanne principale (21), la conduite pilote (1) étant mobile le long de l'élément à fil de nettoyage (3) qui est guidé en son intérieur, l'élément à fil de nettoyage (3) comportant un contour d'actionnement (45), qui au moins lors de l'ajustage de la course du piston de vanne principale (21) est susceptible d'être amené en appui coulissant avec un contour antagoniste (51) conçu sur le piston de vanne principale (21), à savoir en établissant une force principale (F) agissant sur l'élément à fil de nettoyage (3), **caractérisée en ce que** l'élément à fil de nettoyage (3) présente un profil rond ou un profil polygonal, notamment un profil carré, l'élément à fil de nettoyage (3) présentant sur le corps de base en fil métallique (49) un profilage ondulé (53), le contour d'actionnement (45) étant une extrémité libre de fil métallique de l'élément à fil de nettoyage (3), l'élément à fil de nettoyage (3) guidé à travers la conduite pilote (1) saillant par son extrémité libre de fil métallique (45) par-dessus un orifice de la conduite pilote (47) qui fait face à la chambre d'alimentation (13), et pour créer le contour d'actionnement (45), l'extrémité libre de fil métallique étant écartée par rapport au corps de base en fil métallique (49) de la valeur d'un angle oblique (α), l'extrémité libre de fil métallique (45) comportant une boucle (55) coudée.

4. Vanne de régulation, commandée par son propre fluide selon l'une quelconque des revendications précédentes, **caractérisée en ce qu'** un bord d'ouverture de l'orifice de la conduite pilote (47) est conçu sous la forme de contour antagoniste (51).

5. Vanne de régulation, commandée par son propre fluide selon la revendication 4, **caractérisée en ce que** l'extrémité libre de fil métallique (45) de l'élément à fil de nettoyage (3) est distancée par l'intermédiaire d'un passage libre des parois de délimitation de la chambre d'alimentation (13).

6. Vanne de régulation, commandée par son propre fluide selon la revendication 1, **caractérisée en ce que** l'élément à fil de nettoyage (3) présente un profil rond ou un profil polygonal, notamment un profil carré et **en ce que** notamment l'élément à fil de nettoyage (3) à profil polygonal est tordu en spirale pour augmenter les propriétés de raclage des arêtes.

7. Vanne de régulation, commandée par son propre fluide selon l'une quelconque des revendications 2, 3 ou 6, **caractérisée en ce que** lorsque l'extrémité libre de fil métallique est écartée par rapport au corps de base en fil métallique (49) de la valeur d'un angle oblique (α), l'extrémité libre de fil métallique (45) qui s'y raccorde est conçue sous forme rectiligne, avec une section transversale de fil métallique constante en continu.

8. Vanne de régulation, commandée par son propre fluide selon la revendication 2, **caractérisée en ce que** la hauteur des ondes du profilage ondulé (53) s'accroît en direction de l'orifice de la conduite pilote (47) qui fait face à la chambre d'alimentation (13).

9. Vanne de régulation, commandée par son propre fluide selon l'une quelconque des revendications précédentes, **caractérisée en ce que** dans la chambre de commande (5), entre le piston de vanne principale (21) et une paroi de corps de vanne (43) qui y est opposée en direction axiale s'appuie un ressort hélicoïdal de compression (41) et **en ce que** le ressort hélicoïdal de compression (41) est prolongé par l'élément à fil de nettoyage (3).

10. Vanne de régulation, commandée par son propre fluide notamment selon l'une quelconque des revendications précédentes, **caractérisée en ce que** le siège de vanne principale (23) comporte une surface d'étanchéité (57) qui fait face au piston de vanne principale (21) et **en ce que** la surface d'étanchéité (57) est divisée en une surface de base (59) plane à la transversale de la direction axiale et en une arête d'étanchéité (61) saillant à partir de celle-ci dans la direction du piston de vanne principale (21).

11. Vanne de régulation, commandée par son propre fluide selon la revendication 10, **caractérisée en ce que** l'arête d'étanchéité (61) est placée à l'intérieur en direction radiale et la surface de base (59) est placée à l'extérieur en direction radiale, et/ou **en ce que** la surface de base (59) agit comme une butée de mouvement, destinée à limiter la course de levage du piston de vanne principale (21).
